# EUROPÄISCHE PATENTSCHRIFT

(11) **EP 2 590 797 B1**
(45) Veröffentlichungstag und Bekanntmachung des Hinweises auf die Patenterteilung: **06.12.2017**
(21) Anmeldenummer: 11731261.1
(22) Anmeldetag: 29.06.2011
(51) Int. Cl.: B29C 47/20, B29C 44/50, E06B 9/11, E06B 9/15, B29C 47/10

(54) **SCHRANKROLLLADEN**
CABINET ROLL-FRONTS
VOLET ROULANT POUR ARMOIRE

(30) Priorität: 06.07.2010 DE 102010026272
(43) Veröffentlichungstag der Anmeldung: 15.05.2013
(73) Patentinhaber: Rehau AG & Co, 95111 Rehau (DE)
(72) Erfinder: SCHIFFLER, Thomas, 95213 Münchberg (DE); RÖDEL, Silvio, 08606 Oelsnitz (DE); HERMANN, Andreas, 95111 Rehau (DE)
(86) Internationale Anmeldenummer: PCT/EP2011/003213
(87) Internationale Veröffentlichungsnummer: WO 2012/003934

(56) Entgegenhaltungen:
- EP-A1- 2 169 000
- EP-A1- 2 189 494
- EP-A2- 1 087 092
- WO-A2-98/08667
- DE-U1-202005 015 289
- GB-A- 2 014 153
- JP-A- 2006 130 112
- US-A1- 2008 003 870

## Beschreibung

Die Erfindung betrifft einen Schrankrolladen bestehend aus aneinandergereihten extrudierten Schrankrolladenelementen.
Im Stand der Technik ist es bekannt, Kunststoffprofile zur Herstellung von Schrankrollläden zu verwenden. Dieser Stand der Technik ist beispielsweise in der DE 20 2004 401 6232 U1 beschrieben. Das Kunststoffprofil wird hierbei aus einem Vollmaterial im Wege eines Extrusionsprozesses erzeugt. Ebenfalls Stand der Technik ist die Herstellung von Wandabschlussprofilen, Kernsockelleisten usw. als Extrusionsprofile.
Bekannt ist ferner der Einsatz von chemischen Treibmitteln zur Erzeugung von geschäumten Extrusionsprofilen. Die Treibmittel werden dem Extrusionsprozess zugegeben und bewirken durch eine chemische Reaktion die gewünschten Gaseinschlüsse. Nachteilig bei diesem Verfahren sind das im Allgemeinen unregelmäßige Schaumbild, insbesondere an der äußeren Oberfläche der Profile, sowie die hohen Kosten für die chemischen Zusatzmittel.
Die EP 2 169 000 A1 offenbart ein geschäumtes Extrusionsprofil mit einem sehr hohen Schäumungsgrad. Aus der EP 2 189 494 A1 ist ein Extrusionsprofil mit einem hohen "closed cell ratio" von mindestens 70 % bekannt.
Die US 2008/003870 A1 offenbart ein Brett, welches aus einem geschäumten Thermoplast bestehen kann. Die DE 20 2005 015 289 U1 beschreibt eine Frontjalousie für ein Schrankmöbel, bei dem die einzelnen Elemente der Frontjalousie aus Extrusionsprofilen hergestellt sind. Die JP 2006 130112 A offenbart eine Badewannenabdeckung aus einem geschäumten Material.
Aus der GB 2 014 153 A und der WO98/08667 sind physikalisch geschäumte Kunststoffe bekannt. Die EP 1 087 092 A2 offenbart einen Schrankrolladen für Möbelstücke. Der Erfindung liegt die Aufgabe zugrunde, einen Schrankrolladen anzugeben, welcher sich durch einen geringen Materialverbrauch sowie gleichmäßige Struktureigenschaften auszeichnet. Darüber hinaus soll eine kostengünstige Fertigung möglich sein.

Diese Aufgabe wird durch die Merkmale des Patentanspruchs 1 gelöst.

Erfindungsgemäß wurde erkannt, dass sich durch den Zusatz von physikalischen Treibfluiden, vorzugsweise in einen Extrusionsprozess zur Herstellung der Schrankrolladenelemente kostengünstig eine sehr gleichmäßige Struktur des Schrankrolladenelements bei gleichzeitig gewünschter Materialeinsparung erzielen lässt. Aufgrund der durch die physikalische Schäumung möglichen gleichmäßigen Struktur des hergestellten Bauteiles ist es möglich, im Wege eines Extrusionsprozesses ein Profil zu fertigen, welches eine glatte, zumindest im Wesentlichen geschlossene, vorzugsweise vollständig geschlossene, Oberfläche aufweist. Entsprechend ist es möglich, mit reduziertem Materialeinsatz ein Schrankrolladenelement zu schaffen, welches äußerlich einem aus Vollmaterial bestehenden Schrankrolladenelement gleicht. Vorzugsweise ist das Schrankrolladenelement einstückig ausgebildet.

Vorzugsweise enthält das Schrankrolladenelement physikalisch geschäumtes Polypropylen (PP), Polyethylen (PE), Polystyrol (PS), Acrylnitril/Butadien/Styrol (ABS) oder eine Mischung mindestens zweier der vorgenannten Materialien.

Als physikalische Treibfluide können Stickstoff und/oder Kohlendioxid eingesetzt werden. Entsprechend weist der geschäumte Kunststoff vorzugsweise Schaumzellen auf, die mit dem eingesetzten Treibfluid, vorzugsweise N₂ und/oder CO₂, gefüllt sind. Die durch die physikalische Schäumung erzeugten Schaumzellen besitzen eine mittlere Zellgröße von 10 bis 60 µm, vorzugsweise 20 bis 50 µm. Dies ermöglicht eine sehr gleichmäßige Struktur der Schäumung.

Die physikalische Schäumung bewirkt eine Reduktion der mittleren Dichte des geschäumten Kunststoffes gegenüber ungeschäumtem Material um 5 bis 25 %, vorzugsweise 10 bis 20 %. So kann beispielsweise die mittlere Dichte des Schrankrolladenelements durch die Schäumung von 1,2 bis 1,3 g/cm³ ohne Schäumung auf 1,0 bis 1,1 g/cm³, insbesondere auf 1,05 bis 1,08 g/cm³, abgesenkt werden.

Zweckmäßigerweise enthält der geschäumte Kunststoff steifigkeitserhöhende Zuschlagstoffe, vorzugweise Talkum und/oder Kreide und/oder Hydrocerol. Diese Zuschlagstoffe sind je nach Anwendungsfall unabhängig von der Aufschäumung des Kunststoffes - also auch bei der Herstellung entsprechender Profile aus Kunststoff-Vollmaterial - erforderlich, um eine ausreichende mechanische Stabilität des Schrankrolladenelements zu gewährleisten. Die steifigkeitserhöhenden Zuschlagstoffe bewirken eine Erhöhung der Dichte gegenüber reinem Kunststoffmaterial von beispielsweise 0,95 bis 1,0 g/cm³ bei PP auf einen Wert von 1,2 bis 1,3 g/cm³, insbesondere 1,22 bis 1,26 g/cm³. Somit wird durch das physikalische Schäumen nun wiederum annähernd ein Dichtewert erreicht, welcher dem reinen Kunststoffmaterial ohne Zuschlagstoffe entspricht. Überraschenderweise begünstigen die Zuschlagstoffe zusätzlich eine gleichmäßige und feinporige Schäumung und tragen daher ebenfalls zu einer einwandfreien geschlossenen Außenhaut des Schrankrolladenelementes bei.

Im Rahmen der Erfindung hat sich gezeigt, dass die durch die physikalische Schäumung geringfügig reduzierte mechanische Belastbarkeit der Schrankrollladenelemente durch ein entsprechend niedrigeres Gewicht der Elemente ausgeglichen wird, sodass sich hier insgesamt ein in etwa neutraler Einfluss der Schäumung feststellen lässt.

Bei einem Verfahren zur Herstellung eines Schrankrolladenelementes mittels eines Extrusionprozesses
- wird zur Herstellung des Schrankrolladenelementes ein Kunststoffmaterial einem Extruder zugeführt wird,
- wobei zur Aufschäumung des Kunststoffmaterials dem Extruder gleichzeitig ein physikalisches Treibfluid, insbesondere Kohlendioxid und/oder Stickstoff, zugeführt wird,
- und wobei durch den Extrusionsprozess eine glatte, zumindest im Wesentlichen geschlossene freie Außenoberfläche des fertigen Schrankrolladenelementes sichergestellt wird.

Das Gewichtsverhältnis von Treibfluidzufuhr zu Kunststoffmaterialzufuhr (Polymer(e) incl. Zuschlagsstoffe sowie ggf. weiterer Komponenten) beträgt 0,01 bis 0,05 %, vorzugsweise 0,02 bis 0,04%.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Kunststoffprofil in einer dreidimensionalen Darstellung und
- Fig. 2: ein erfindungsgemäßes Verfahren zur Herstellung eines Kunststoffprofils gemäß Fig. 1.

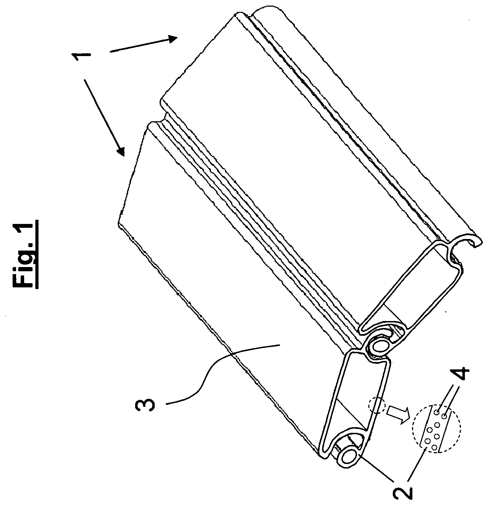

Figur 1 zeigt ein Kunststoffprofil, welches als Kunststoff-Extrusionsprofil ausgebildet ist. Das Kunststoffprofil besteht aus einem extrudierten Profilelement 1, welches aus einem physikalisch geschäumten Kunststoff 2 gefertigt wurde. Das Profilelement 1 weist eine glatte, geschlossene, freie Außenoberfläche 3 auf. Diese glatte Außenoberfläche 3 kann aufgrund der mit der physikalischen Schäumung erzielbaren sehr gleichmäßigen Schaumstruktur im Rahmen des Extrusionsprozesses sichergestellt werden. Bei Verwendung von chemischen Treibmitteln ist die Herstellung einer solch einwandfreien Außenoberfläche hingegen nicht bzw. nur eingeschränkt möglich. Im Ausführungsbeispiel besteht das Profilelement 1 aus physikalisch geschäumtem Polypropylen 2. Der geschäumte Kunststoff 2 weist Schaumzellen 4 auf, die mit dem eingesetzten Treibfluid, vorzugsweise N₂ und/oder CO₂, gefüllt sind. Die Schaumzellen 4 sind in der Ausschnittsdarstellung in Fig. 1 stark vergrößert dargestellt und weisen eine mittlere Zellgröße von 20 bis 50 µm, vorzugsweise 30 bis 40 µm, auf. Die physikalische Schäumung bewirkt eine Reduktion der mittleren Dichte des geschäumten Kunststoffs gegenüber ungeschäumtem Material um 10 bis 20 %, vorzugsweise 12 bis 18 %, insbesondere 13 bis 17 %, z.B. ca. 14 %, also beispielsweise von ca. 1,24 g/cm³ auf ca. 1,07 g/cm³. Der geschäumte Kunststoff enthält ferner steifigkeitserhöhende Zuschlagstoffe, beispielsweise Talkum und/oder Kreide und/oder Hydrocerol.

Wie der Figur 1 zu entnehmen ist, ist das Profilelement 1 als Schrankrollladenelement ausgebildet, wobei das Schrankrollladenelement einzig und allein aus dem einstückigen Profilelement 1 besteht. Reiht man mehrere Schrankrollladenelemente 1 aneinander und verbindet jeweils benachbarte Schrankrollladenelemente 1 gelenkig miteinander, so wie in Figur 1 dargestellt, erhält man schließlich einen Schrankrollladen für Möbelstücke.

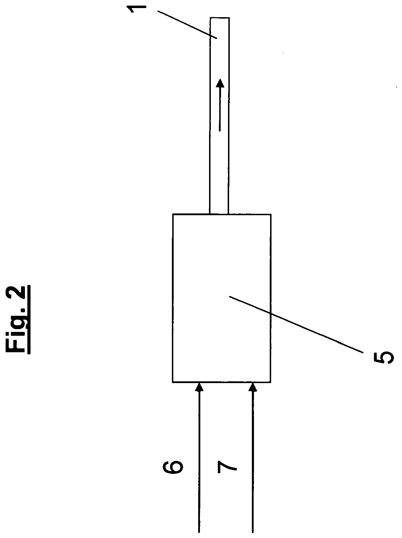

In Figur 2 ist ein Verfahren zur Herstellung eines Kunststoffprofils dargestellt, bei dem ein Profilelement 1 mittels eines Extrusionsprozesses hergestellt wird. Hierzu wird einem Extruder 5 Kunststoffmaterial 6 zugeführt. Das Kunststoffmaterial 6 enthält PP sowie steifigkeitserhöhende Zuschlagstoffe, wie oben genannt. Zur Aufschäumung des Kunststoffmaterials 6 wird dem Extruder 5 gleichzeitig ein physikalisches Treibfluid 7, beispielsweise CO₂ und/oder N₂, zugeführt. Durch den Extrusionsprozess wird eine glatte, geschlossene freie Außenoberfläche des fertigen Profilelementes 1 sichergestellt. Dies ist, wie vorstehend beschrieben, nur deshalb möglich, weil als Treibfluid 7 lediglich physikalisch wirkende Stoffe eingesetzt werden. Beim Einsatz chemischer Treibmittel hingegen wäre im Rahmen eines Extrusionsprozesses die beschriebene einwandfreie äußere Oberfläche 3 des erzeugten Extrusionsprofils nicht bzw. nur eingeschränkt herstellbar. Das Gewichtsverhältnis von Treibfluidzufuhr zu Kunststoffmaterialzufuhr beträgt im Ausführungsbeispiel 0,02 bis 0,04 %, insbesondere 0,025 bis 0,035 %. Dies entspricht beispielsweise bei einem Extrudatausstoß von ca. 100 kg/h einer Treibfluidzugabe von ca. 30 g/h.

## Patentansprüche

1. Schrankrolladen für Möbelstücke bestehend aus aneinandergereihten extrudierten Schrankrolladenelementen (1), wobei benachbarte Schrankrollladenelemente (1) gelenkig miteinander verbunden sind, **dadurch gekennzeichnet, dass** ein Schrankrolladenelement (1) aus einem physikalisch geschäumten Kunststoff (2) besteht,
- wobei das Schrankrolladenelement (1) eine glatte, zumindest im Wesentlichen geschlossene, freie Außenoberfläche (3) aufweist und wobei der geschäumte Kunststoff (2) Schaumzellen (4) aufweist, die mit dem eingesetzten Treibfluid, vorzugsweise N₂ und/oder CO₂, gefüllt sind,
- wobei die Schaumzellen (4) eine mittlere Zellgröße von 10 bis 60 µm aufweisen und die physikalische Schäumung eine Reduktion der mittleren Dichte des geschäumten Kunststoffs (2) gegenüber ungeschäumtem Material um 5 bis 25 % bewirkt.

2. Schrankrolladen nach Anspruch 1, **dadurch gekennzeichnet, dass** das Schrankrolladenelement (1) physikalisch geschäumtes PP, PE, PS, ABS oder eine Mischung mindestens zweier der vorgenannten Materialien enthält.

3. Schrankrolladen nach Anspruch 1 oder 2, **dadurch gekennzeichnet, dass** die Schaumzellen (4) eine mittlere Zellgröße von 20 bis 50 µm aufweisen.

4. Schrankrolladen nach einem der Ansprüche 1 bis 3, **dadurch gekennzeichnet, dass** die physikalische Schäumung eine Reduktion der mittleren Dichte des geschäumten Kunststoffs (2) gegenüber ungeschäumtem Material um 10 bis 20 %, bewirkt.

5. Schrankrolladen nach einem der Ansprüche 1 bis 4, **dadurch gekennzeichnet, dass** der geschäumte Kunststoff (2) steifigkeitserhöhende Zuschlagstoffe, vorzugweise Talkum und/oder Kreide und/oder Hydrocerol, enthält.

## Claims

1. Cabinet roll-fronts for items of furniture consisting of extruded cabinet roll-front elements (1) arranged one next to another,
wherein adjacent cabinet roll-front elements (1) are joined together in an articulated manner, **characterised in that**
a cabinet roll-front element (1) consists of a physically foamed plastic (2),
- wherein the cabinet roll-front element (1) has a smooth, at least substantially closed, free outer surface (3) and wherein the foamed plastic (2) comprises foam cells (4), which are filled with the blowing fluid that was employed, preferably N2 and/or CO₂,
- wherein the foam cells (4) have an average cell size of 10 to 60 µm and the physical foaming causes a reduction in the average density of the foamed plastic (2) of 5 to 25% compared to non-foamed material.

2. The cabinet roll-fronts according to claim 1, **characterised in that** the cabinet roll-front element (1) contains physically foamed PP, PE, PS, ABS or a mixture of at least two of the above-mentioned materials.

3. The cabinet roll-fronts according to claim 1 or 2, **characterised in that** the foam cells (4) have an average cell size of 20 to 50 µm.

4. The cabinet roll-fronts according to one of claims 1 to 3, **characterised in that** the physical foaming causes a reduction in the average density of the foamed plastic (2) of 10 to 20% compared to non-foamed material.

5. The cabinet roll-fronts according to one of claims 1 to 4, **characterised in that** the foamed plastic (2) contains stiffness-enhancing fillers, preferably talc and/or chalk and/or Hydrocerol.

## Revendications

1. Volets roulant d'armoire pour des éléments de meuble constitués d'éléments (1) de volet roulant d'armoire extrudés, montés côte-à-côte,
des éléments de volet roulant d'armoire (1) adjacents étant reliés les uns aux autres de manière articulée, **caractérisé en ce qu'**un élément de volet roulant d'armoire (1) se consiste en un matière plastique (2) expansée physiquement,
- l'élément de volet roulant d'armoire (1) présentant une surface extérieure (3) lisse, libre et au moins substantiellement fermée et la matière plastique expansée (2) présentant des cellules de mousse (4) emplies du fluide d'expansion utilisé, de préférence du N2 et/ou du CO₂,
- les cellules de mousse (4) ayant une taille de cellule moyenne allant de 10 à 60 µm et l'expansion physique de mousse provoquant une réduction de la densité moyenne du plastique expansé (2) de 5 à 25 % par rapport à un matériau non expansé.

2. Volets roulant d'armoire selon la revendication 1, **caractérisés en ce que** l'élément de volet roulant d'armoire comprend du PP, PE, PS, ABS à expansion physique de mousse ou un mélange d'au moins deux des matériaux susmentionnés.

3. Volets roulant d'armoire selon la revendication 1 ou 2, **caractérisés en ce que** les cellules de mousse (4) présentent une taille moyenne allant de 20 à 50 µm.

4. Volets roulant d'armoire selon l'une quelconque des revendications 1 à 3, **caractérisés en ce que** l'expansion physique de mousse provoque une réduction de la densité moyenne du plastique expansé (2) de 10 à 20 % par rapport à un matériau non-moussé.

5. Volets roulant d'armoire selon l'une quelconque des revendications 1 à 4, **caractérisés en ce que** le plastique expansé (2) contient des additifs augmentant la rigidité, de préférence du talc et/ou de la craie et/ou de l'hydrocérol.
